# EUROPEAN PATENT SPECIFICATION

(11) **EP 4 308 265 B1**
(45) Date of publication and mention of the grant of the patent: **23.07.2025**
(21) Application number: 22714084.5
(22) Date of filing: 14.03.2022
(51) Int. Cl.: B01D 27/08, B01D 35/30

(54) **FILTER HOUSING FOR SPIN-ON OR BOWL CARTRIDGE ASSEMBLIES**
FILTERGEHÄUSE FÜR ANSCHRAUBBARE ODER ANSCHRAUBBARE PATRONENANORDNUNGEN
BOÎTIER DE FILTRE POUR ENSEMBLES CARTOUCHE À VISSER OU À BOL

(30) Priority: 16.03.2021 US 202163161523 P
(43) Date of publication of application: 24.01.2024
(73) Proprietor: DONALDSON COMPANY, INC., Bloomington, MN 55431 (US)
(72) Inventor: GUSTAFSON, Michael, J., Bloomington, MN 55431 (US)
(74) Representative: IPLodge bv
(86) International application number: PCT/US2022/020193
(87) International publication number: WO 2022/197609

(56) References cited:
- EP-A2- 0 314 963
- US-A- 4 362 618
- US-A1- 2006 049 098
- US-A1- 2012 216 497

## Description

### Technical Field

The present disclosure relates to liquid filter arrangements useable, for example, as lube, hydraulic, or fuel filters. In particular, this disclosure relates to a filter housing for such filter arrangements, in which the housing has a ring with an angled threaded section.

### Background

Circulating liquid systems, such as fuel, hydraulic fluids, and lubricating fluids, typically require a filter arrangement. The filter arrangement is typically positioned so that the fluids are filtered by passage through filter media positioned within the filter arrangement. Typically the filter arrangement is configured so that the componentry containing the media is a service part, i.e., the media can, periodically, be removed and be replaced.

There are two common types of liquid filter arrangements. The first, typically referred to herein as a "spin-on" type, involves a filter head installed on equipment, and a spin-on filter member or cartridge. The filter member or cartridge is often referred to as "spin-on" because the assembly including the filter media is typically secured to the filter head by threading. In spin-on arrangements, the filter media is typically secured within a shell or housing as a housing/media combination, and the entire housing/media combination, as a filter member or cartridge, is removed and replaced during servicing.

The second common type of liquid filter arrangement is referred to herein as a bowl/cartridge arrangement. With a bowl/cartridge arrangement, the filter head is again installed on the equipment. The filter media, however, is contained within a filter cartridge in a form removably positioned within a housing or shell. A housing/cartridge combination is again mounted on the filter head for use. However, during servicing, the housing is disconnected from the filter head, the media contained within the housing or shell is replaced, and the same shell or housing, with the replacement media inside, is then remounted on the filter head.

Improvements in these types of arrangements are desirable.

US2006/049098 A1 discloses a water filter comprising a cylinder and a filter cover which is screwed to the cylinder.

### Summary

According to the present disclosure, a variety of features and techniques are provided that can be implemented in liquid filter arrangements, such as a fuel filter arrangement or hydraulic or lubricant (oil) filter arrangements. The techniques are generally applicable to both spin on and bowl/cartridge filter arrangements.

It is an object of the present disclosure to provide a filter housing according to claim 1 and a spin-on filter assembly according to claim 15.

In one aspect, a filter housing is provided. The filter housing comprises: (a) a surrounding wall defining an interior volume; the surrounding wall having an interior surface in communication with the interior volume and an opposite exterior surface; the housing having first and second opposite ends, and an open mouth in communication with the interior volume at the first end; (i) a longitudinal axis extending through the first and second ends of the housing; and (b) a threaded section with a threaded section first end and an opposite threaded section second end; the threaded section first end being above the threaded section second end when the housing is oriented with longitudinal axis extending vertically and the housing first end being above the housing second end; (i) the threaded section being angled at an angle relative to a line parallel to the longitudinal axis, as the threaded section extends from the threaded section first end toward the threaded section second end; (ii) the angle being at least 1 degree.

In example embodiments, the angle is angled radially outwardly from the line parallel to the longitudinal axis.

In one or more examples, the angle is angled radially inwardly from the line parallel to the longitudinal axis.

According to the invention, the threaded section first end is next to the mouth, and the threaded section second end is spaced from the mouth.

In one or more examples, there further includes a ring positioned along the mouth; the ring having the threaded section.

In one or more examples, the ring circumscribes the exterior surface of the surrounding wall.

In one or more examples, the ring is positioned against the exterior surface of the surrounding wall.

In one or more examples, the ring is circumscribed by the surrounding wall.

In one or more examples, the ring is positioned against the interior surface of the surrounding wall.

In one or more examples, the surrounding wall is wrapped over an end of the ring.

According to the invention, there further includes a seal member secured thereto.

According to the invention, there further includes a recess located axially between the threaded section and the mouth, the recess holding the seal member.

In one or more examples, the ring has the recess for holding the seal member.

In one or more examples, the surrounding wall is wrapped over the first ring end and extends into the recess.

In one or more examples, there further includes a seal member positioned radially between the ring and the surrounding wall.

In one or more examples, there further includes an end plate at least partially covering the first end of the housing; the end plate having a central opening defining the open mouth.

In one or more examples, the end plate includes a spigot projecting from a remaining portion of the end plate, the spigot defining the open mouth.

In one or more examples, the spigot has the threaded section.

In one or more examples, the spigot extends axially in a direction away from a remaining portion of the filter housing.

In one or more examples, the spigot extends axially in a direction into the interior volume of the surrounding wall.

In one or more examples, the threaded section is interiorly directed.

In one or more examples, the threaded section has at least 3 threads.

In one or more examples, the threaded section has 4 or more threads.

In one or more examples, the ring angle is between 1-20 degrees.

In one or more examples, the ring angle is between 2-8 degrees.

In one or more examples, the housing is metal and the ring is non-metal.

In one or more examples, the housing and the ring comprise a polymeric material.

In one or more examples, the housing is metal and the ring is metal.

In a further aspect, a spin-on filter assembly is provided comprising a filter housing as characterized above and a filter element non-removably positioned in the interior volume.

In example embodiments, the filter element comprises: (a) a pleated section of filter media extending between a first end cap and an opposite second end cap; the first end cap being adjacent to the open mouth; (b) the first end cap having a central opening; and (c) a filter element seal member being secured to the first end cap.

In a further aspect, a bowl filter assembly is provided comprising a filter housing as characterized above and a filter cartridge removably positioned in the interior volume.

In example embodiments, the filter cartridge comprises: (a) a pleated section of filter media extending between a first end cap and an opposite second end cap; the first end cap being adjacent to the open mouth; (b) the first end cap having a central opening; and (c) a filter element seal member being secured to the first end cap.

In another aspect, which is not claimed, a method of mounting a filter housing on a filter head is provided. The filter housing has a central longitudinal axis, and the method comprises: releasably securing a filter housing to a filter head by screwing a threaded section on the housing to the filter head until sealed against the filter head; the threaded section being angled at an angle relative to a line parallel to the longitudinal axis, as the threaded section extends from a threaded section first end toward a threaded section second end; and the angle being at least 1 degree.

In example methods, the angle is between 2-8 degrees.

In example methods, the threaded section is on a ring positioned against a surrounding wall of the filter housing.

In example methods, the ring is positioned against an exterior surface of the surrounding wall.

In example methods, the ring is positioned against an interior surface of the surrounding wall.

In example methods, the filter housing has an end plate and a spigot extending axially from the end plate; the spigot having the threaded section.

In another aspect, a filter housing is provided comprising: a surrounding wall defining an interior volume; the surrounding wall having an interior surface in communication with the interior volume and an opposite exterior surface; the housing having first and second opposite ends, and an open mouth in communication with the interior volume at the first end; and a threaded section with a first end next to the mouth and a second end spaced from the mouth; the threaded section being angled radially outwardly at an angle as the threaded section extends from the first end toward the second end; and the angle being at least 1 degree.

In example arrangements, the housing further includes a seal member secured thereto.

In one or more embodiments, the housing includes a recess located axially between the threaded section and the mouth, the recess holding the seal member.

In preferred implementations, the housing further includes a ring circumscribing the exterior surface of the surrounding wall; the ring having the threaded section. The ring has a first ring end and an opposite second ring end; the ring having the recess for holding the seal member.

In some examples, the surrounding wall is wrapped over the first ring end and extends into the recess.

For many examples, the threaded section has at least 3 threads.

For many examples, the threaded section has 4 or more threads.

In one or more embodiments, the ring angle is between 1-20 degrees.

In one or more embodiments, the ring angle is between 2-8 degrees.

In example embodiments, the ring is against the exterior surface of the surrounding wall.

For some arrangements, the housing is metal and the ring is non-metal.

For some arrangements, the housing and the ring comprise a polymeric material.

For some arrangements, the housing is metal and the ring is metal.

In a further aspect, a spin-on filter assembly comprises a filter housing as variously characterized above and a filter element non-removably positioned in the interior volume.

In one or more examples, the filter element comprises: a pleated section of filter media extending between a first end cap and an opposite second end cap; the first end cap being adjacent to the open mouth; the first end cap having a central opening; and a filter element seal member being secured to the first end cap.

In a further aspect, a bowl-filter cartridge comprises a filter housing as variously characterized above and a filter cartridge removably positioned in the interior volume.

In one or more examples, the filter cartridge comprises a pleated section of filter media extending between a first end cap and an opposite second end cap; the first end cap being adjacent to the open mouth; the first end cap having a central opening; and a filter element seal member being secured to the first end cap.

In a further aspect, a method of mounting a filter housing on a filter head is provided; the method comprising: releasably securing a filter housing to a filter head by screwing a threaded section on the housing to the filter head until a seal member secured to the housing forms a seal against the filter head; the threaded section being angled radially outwardly at an angle as the threaded section extends from a first end toward a second end; the first end being adjacent to an open mouth in the housing; and the angle being at least 1 degrees.

In some example methods, the angle is between 2-8 degrees.

There is no requirement that all of the techniques described herein be incorporated in a given system, for that system to obtain at least some advantage.

### Brief Description of the Drawings

FIG. 1 a cross-sectional view of an embodiment of a filter assembly, constructed in accordance of principles of this disclosure;
FIG. 2 is a schematic cross-sectional view of a ring and a portion of the housing of the filter assembly of FIG. 1;
FIG. 3 is a schematic cross-sectional view of the ring of FIG. 2 secured to a filter head, only a portion of the filter head being depicted;
FIG. 4 is a schematic cross-sectional view of a portion of another embodiment of a filter assembly, which is not, as specifically depicted, claimed, constructed in accordance of principles of this disclosure;
FIG. 5 is a schematic cross-sectional view of a portion of another embodiment of a filter assembly, which is not, as specifically depicted, claimed, constructed in accordance of principles of this disclosure; and
FIG. 6 is a schematic cross-sectional view of a portion of another embodiment of a filter assembly, which is not, as specifically depicted, claimed, constructed in accordance of principles of this disclosure.

### Detailed Description

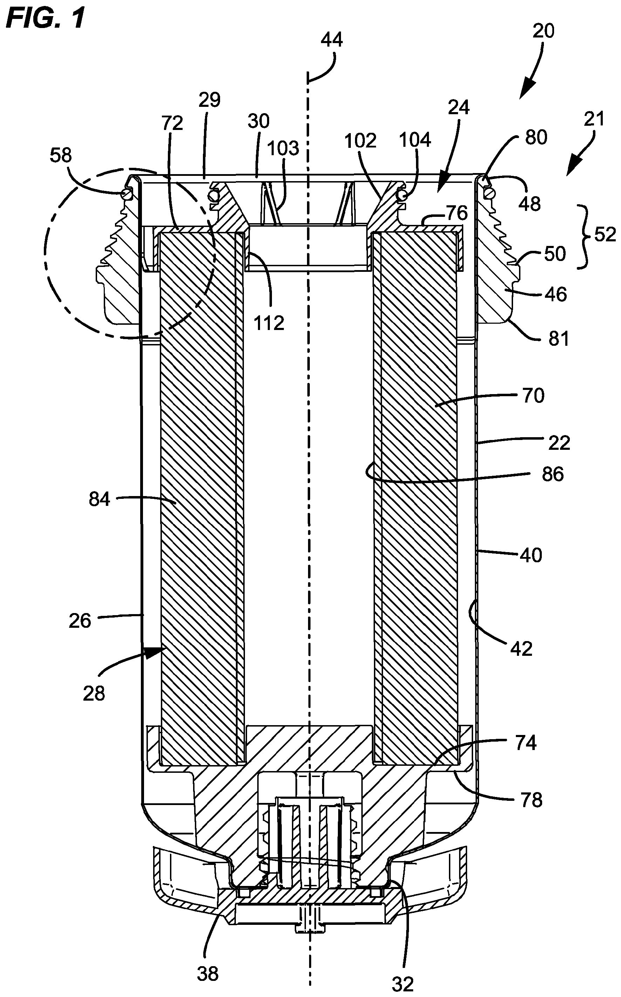

FIGS. 1-3 illustrate an example embodiment of a filter housing having a tapered or angled threaded section / interface with a filter head. The angled threaded section allows for easy installation and thread engagement before a seal is created with the filter head. This results in easy installation and an increased burst strength. The housing can be made from a thinner material than the conventional housing, resulting in less cost.

In reference now to FIG. 1, a filter assembly is shown generally at 20. The filter assembly 20 is a spin-on filter arrangement 21, in which there is a housing 22 holding a non-removable filter element 24. The filter assembly 20 could also be a bowl-cartridge assembly, by making the filter element/cartridge 24 removable and replaceable from the housing 22.

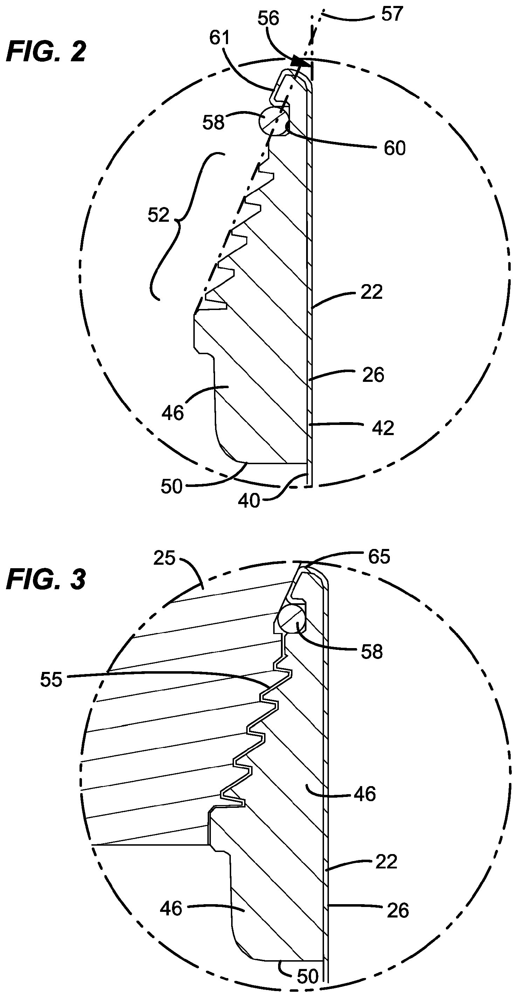

The housing 22 removably connects to a filter head 25 (FIGS. 3-6). After a period of time, the housing 22 is removed from the filter head 25. When using spin-on arrangement 21, the entire spin-on arrangement 21 is replaced with a new one and reinstalled on the filter head 25. When using a bowl-cartridge assembly, the filter cartridge 24 is removed from the housing 22, and a new filter cartridge 24 is inserted into the housing 22. The housing 22 with the new filter cartridge 24 is again reinstalled on the filter head 25.

The filter housing 22 includes a surrounding wall 26 defining an interior volume 28. The housing 26 has, at a first end 29, an open mouth 30 in communication with the internal volume 28. For a bowl filter cartridge, the cartridge 24 can be removed and replaced through the open mouth 30. The housing 22 further include a second end 32 opposite of the open mouth 30.

In some arrangements, e.g. for fuel filters, there can be a valve assembly 38 at the second end 32.

The surrounding wall 26 has an exterior surface 40 and an opposite interior surface 42. The filter housing 22 includes a longitudinal axis 24 passing through the mouth 30 at the first end 29 and second end 32. In general, the longitudinal axis 44 is parallel to a main section of the wall 26 of the housing 22. When the housing 22 is oriented with the longitudinal axis 44 extending vertically, the housing first end 29 is positioned vertically above the housing second end 32.

The filter housing 22 includes a threaded section 52. The threaded section 52 includes a plurality of threads 54 constructed and arranged to threadably connect with appropriately shaped threads 55 (FIG. 3) on the filter head 25. Preferably, there are at least three threads, and in many cases, four or more threads. The threads 54 can include a variety of thread shapes such as: buttress, modified buttress, UN, acme, stub acme, trapezoidal, V, square, knuckle, Whitworth, American Pipe, British Pipe, metric parallel, metric tapered, etc.

The threaded section 52 can form part of the surrounding wall 26, or it may be on other parts of the assembly, as explained further.

The threaded section 52 has a threaded section first end 48 and an opposite threaded section second end 50. The threaded section first end 48 is positioned above the threaded section second end 50 when the housing 22 is oriented with the longitudinal axis 44 extending vertically and the housing first end 29 being above the housing second end 32.

In preferred embodiments, and in accordance with principles of this disclosure, the threaded section 52 is angled at an angle 56 relative to a line parallel to the longitudinal axis 44, as the threaded section 52 extends from the threaded section first end 48 toward the threaded section second end 50. The angle 56 is non-zero, acute, and at least 1 degree. In FIG. 2, the line 57 is along the threaded section 52 and intersects the longitudinal axis 44. The angle 56 can be at least 1°, for example no greater than 20°, and preferably between 2-8°.

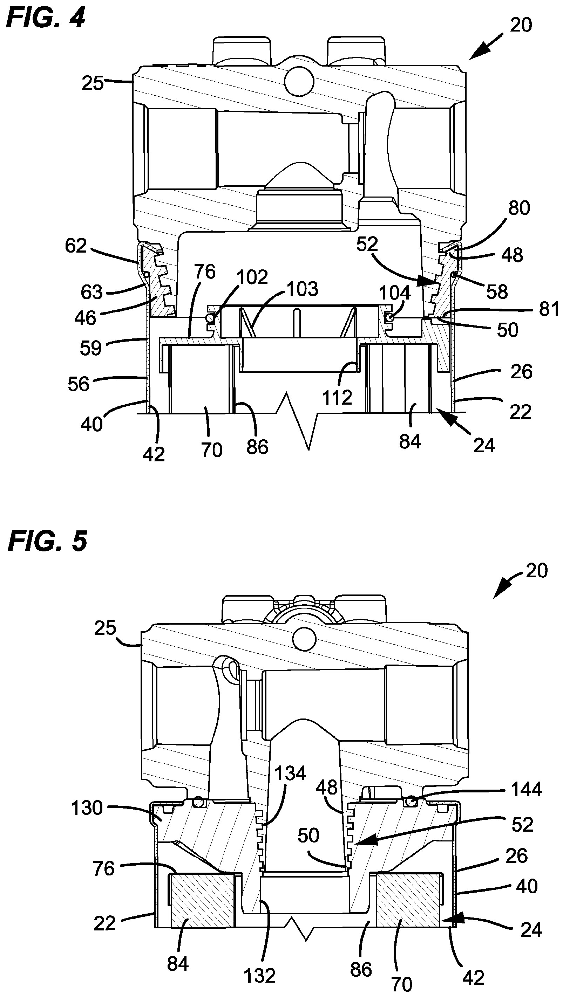

Various embodiments are possible. In some embodiments, e.g. FIG. 3, the angle 56 is angled radially outwardly from the line parallel to the longitudinal axis 44. In some embodiments, which are not, as specifically depicted, claimed, e.g. FIGS. 4-6, the angle 56 is angled radially inwardly from the line parallel to the longitudinal axis 44.

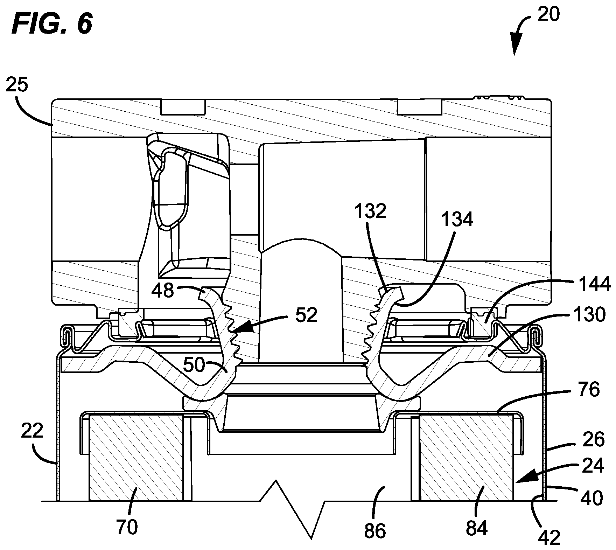

In some embodiments, e.g. FIGS. 1-5, the threaded section first end 48 is next to the mouth 30, and the threaded section second end 50 is spaced from the mouth 30. In other embodiments, e.g. FIG. 6, which is not, as specifically depicted, claimed, the threaded section second end 50 is next to the mouth 30, and the threaded section first end 48 is spaced away from the mouth 30.

In some embodiments, the filter housing 22 can include a ring 46. The ring 46 can be made from a variety of materials including non-metal, such as a polymeric material such as plastic. In some examples, the ring 46 can also be made from metal. The ring 46 can be positioned along the mouth 30.

In the embodiment of FIGS. 1-3, the ring 46 circumscribes the exterior surface 40 of the surrounding wall 26. In some embodiments, ring 46 can be positioned to be directly against the exterior surface 40 of the surrounding wall 26.

In the embodiment of FIG. 4, which is not, as specifically depicted, claimed, the ring 46 is circumscribed by the interior surface 42 of the surrounding wall 26, and can be positioned directly against the interior surface 42 of the surrounding wall 26.

The ring 46 has a first ring end 80 and an opposite second ring end 81. In some example embodiments (FIGS. 1-4), the first ring end 80 is next to or adjacent the mouth 30, with the second ring end 81 spaced away from the mouth 30. For example, the second ring end 81 can be spaced along the wall 26 between the first ring end 80 and the second end 32 of the housing 22.

Between the first ring end 80 and second ring end 81 is the threaded section 52.

The threaded section 52 is angled outwardly the angle 56 (FIG. 2), as the threaded section 52 extends from the first ring end 80 toward the second ring end 81.

In accordance with principles of this disclosure, the filter housing 22 can include a seal member 58. This may be embodied in a variety of implementations.

In the example shown in FIGS. 1-3, the ring 46 includes a recess 60 located axially between the threaded section 52 and the mouth 30, in which the seal member 58 is located in and held within the recess 60.

The housing surrounding wall 56 is secured to the ring 46. In one example, the surrounding wall 56 is wrapped over the first ring end 80; see FIGS. 2 and 4. In the embodiment of FIG. 2, the surrounding wall 56 is folded into or extending into the recess 60 to help lock the wall 26 to the ring 46 with folded section 61. Many different connection mechanisms are possible, including the use of adhesive.

In the embodiment of FIG. 4, which is not, as specifically depicted, claimed, the seal member 58 is positioned radially between the ring 46 and the surrounding wall 56. In the FIG. 4 embodiment, the surrounding wall 56 has a first diameter region 59 and a second diameter region 62. The second diameter region 62 is larger in diameter than the first diameter region 59. The second diameter region 62 is along the open mouth 30 and includes the portion of the surrounding wall 56 that is wrapped over the first ring end 80. The transition or bend 63 between the first diameter region 59 and the second diameter region 62 is positioned the seal member 58 between and against the interior surface 42 of the surrounding wall 56 and the ring 46.

In some embodiments, the filter housing 22 can further include an end plate 130. In FIGS. 5 and 6, which are not, as specifically depicted, claimed, the end plate 130 at least partially covers the first end 29 of the housing 22. The end plate 130 can have a central opening 132 defining the open mouth 30.

The end plate 130 may include a spigot 134. The spigot 134 projects from a remaining portion of the end plate 130 and defines the open mouth 30.

In the embodiment of FIG. 5, the spigot 134 extends axially in a direction away from a remaining portion of the filter housing 22. In the embodiment of FIG. 6, the spigot 134 extends axially in a direction into the interior volume 28 of the surrounding wall 56.

The spigot 134 can include the threaded section 52. The threaded section 52 can be either radially outwardly (i.e., exteriorly) directed, or as shown in FIGS. 5 and 6, the threaded section 52 can be radially inwardly (i.e., interiorly) directed.

In some examples the housing 22 can be made of metal, while in other examples, the housing 22 can be made of non-metal, including a polymeric material, such as plastic. The housing wall 26 can be made thinner than the conventional, prior art housing because of the thread angle 56. The thread angle 56 allows for a stronger connection between the housing 22 and the filter head 25, such that the threaded section 52 can sustain more load than filters using conventional threads.

In addition, because of the thread angle 56, the threads 54 slide past each other before making contact, which reduces a connection problem of crossing threads. To secure the threaded section 52 to the head 25, only a few rotations of the housing 22 to the head 25 will be needed, such 3 or fewer rotations.

The filter element or cartridge 24 is positioned in the interior volume 28 of the housing 22. The filter cartridge 24 includes a media pack 70 having a first end region 72 and an opposite second end region 74.

A first end cap 76 is secured to the first end region 72. A second end cap 78 is secured to the second end region 74.

While many embodiments are possible, in the example shown, the media pack 70 comprises a cylinder of pleated media 84 having an open filter interior 86.

In FIGS. 1 and 4, the first end cap 76 includes a seal holder 102 projecting axially from the first end cap 76 and holding a seal member 104 to form an outwardly directed radial seal. The outwardly directed radial seal is formed with a properly placed filter head. Many embodiments are possible. For example, in other embodiments, the seal member 104 could be inwardly directed. The seal holder 102 is supported by gussets 103 along an inner radial portion of the seal holder 102.

In the example embodiments of FIGS. 1-6, the first end cap 76 has an open center at 112. The second end cap 78 is closed.

In the embodiment of FIG. 6, there is a seal member or gasket 140 between an upper part of the first end cap 76 and an inward facing portion of the end plate 130.

The end plate 130 of FIGS. 5 and 6 can include a face seal 144. The face seal 144 is held by the end plate 130 such that it faces axially away from a remaining portion of the filter element or cartridge 24. The face seal 144 is positioned to form a seal with the filter head 25, when the cartridge 24 is connected to the filter head 25.

The above assemblies can be used in a method of mounting a filter housing onto a filter head. The method can include releasably securing the filter housing 22 to the filter head 25 by screwing the threaded section 52 on the housing 22 to the filter head 25 until the seal member 58 secured to the housing 22 forms a seal 65 (FIG. 3) against the filter head 25. The threaded section 52 is angled radially outwardly at angle 56, as the threaded section 52 extends from the first end 48 towards the second end 50. The angle 56 can be at least 1°, not more than 20°, typically 2-8°.

In example methods, the threaded section 52 is on ring 46 positioned against the surrounding wall 56 of the filter housing 22. In examples, the ring 46 is positioned against exterior surface 40 of the surrounding wall 56. In other examples, the ring 46 is positioned against the interior surface 42 of the surrounding wall 56.

In example methods, the filter housing 22 has end plate 130 and spigot 134 extending axially from the end plate 130, in which the spigot 134 has the threaded section 52.

The above represents example principles. Many embodiments can be made using these principles.

## Claims

1. A filter housing (22) for use in filtration of fuel, hydraulic fluids or lubricating fluids comprising:
(a) a surrounding wall (26) defining an interior volume (28); the surrounding wall (26) having an interior surface (42) in communication with the interior volume (28) and an opposite exterior surface (40); the housing (22) having first and second opposite ends (29, 32), and an open mouth (30) in communication with the interior volume (28) at the first end (29);
(i) a longitudinal axis (44) extending through the first and second ends (29, 32) of the housing (22); and
(b) a threaded section (52) for connecting with a filter head (25) with a threaded section first end (48) and an opposite threaded section second end (50); the threaded section first end (48) being above the threaded section second end (50) when the housing is oriented with longitudinal axis (44) extending vertically and the housing first end (29) being above the housing second end (32);
(i) the threaded section (52) being angled at an angle relative to a line parallel to the longitudinal axis, as the threaded section (52) extends from the threaded section first end (48) next to the mouth (30) toward the threaded section second end (50) spaced from the mouth (30);
(ii) the angle being at least 1 degree;
**characterized in that** the filter housing (22) further includes a recess (60) located axially between the threaded section (52) and the mouth (30), the recess (60) holding a seal member (58).

2. The filter housing (22) of claim 1, wherein the angle is between 1-20 degrees, preferably between 2-8 degrees.

3. The filter housing (22) of claim 1 or 2, wherein the angle is angled radially outwardly from the line parallel to the longitudinal axis (44).

4. The filter housing (22) of claim 1 or 2, wherein the angle is angled radially inwardly from the line parallel to the longitudinal axis (44).

5. The filter housing (22) any of the previous claims, further including a ring (46) positioned along the mouth (30); the ring (46) having the threaded section (52).

6. The filter housing (22) of claim 5, wherein the ring (46) circumscribes the exterior surface (40) of the surrounding wall (26).

7. The filter housing (22) of claim 6, wherein the ring (46) is positioned against the exterior surface (40) of the surrounding wall (26).

8. The filter housing (22) of claim 5, wherein the ring (46) is circumscribed by the surrounding wall (26).

9. The filter housing (22) of claim 8, wherein the ring (46) is positioned against the interior surface (42) of the surrounding wall (26).

10. The filter housing (22) of any one of claims 5-9, wherein the surrounding wall (26) is wrapped over an end of the ring (46).

11. The filter housing (22) of claim 6, wherein the ring (46) has the recess (60) for holding the seal member (58).

12. The filter housing (22) of claim 11, wherein the surrounding wall (26) is wrapped over the first ring end (80) and extends into the recess (60).

13. The filter housing (22) of any one of claims 8 and 9, further including a seal member positioned radially between the ring (46) and the surrounding wall (26).

14. The filter housing (22) of any one of claims 1-13, wherein the threaded section has at least 3 threads.

15. A spin-on filter assembly (20) comprising a filter housing (22) of any one of claims 1-14 and a filter element (24) non-removably positioned in the interior volume (28).

## Patentansprüche

1. Filtergehäuse (22) zur Verwendung bei der Filtration von Kraftstoff, Hydraulikfluids oder Schmierfluids, das Folgendes umfasst:
(a) eine umgebende Wand (26), die ein inneres Volumen (28) definiert; wobei die umgebende Wand (26) eine Innenfläche (42) in Verbindung mit dem inneren Volumen (28) und eine entgegengesetzte Außenfläche (40) aufweist; wobei das Gehäuse (22) ein erstes und ein entgegengesetztes zweites Ende (29, 32) und eine offene Mündung (30) in Verbindung mit dem inneren Volumen (28) an dem ersten Ende (29) aufweist;
(i) wobei sich eine Längsachse (44) durch das erste und das zweite Ende (29, 32) des Gehäuses (22) erstreckt; und
(b) eine mit Gewinde versehen Sektion (52) zum Verbinden mit einem Filterkopf (25) mit einem ersten Gewindesektionsende (48) und einem entgegengesetzten zweiten Gewindesektionsende (50), wobei sich das erste Gewindesektionsende (48) oberhalb des zweiten Gewindesektionsendes (50) befindet, wenn das Gehäuse so ausgerichtet ist, dass sich die Längsachse (44) in Vertikalrichtung erstreckt und sich das erste Gehäuseende (29) oberhalb des zweiten Gehäuseendes (32) befindet;
(i) wobei die mit Gewinde versehene Sektion (52) in einem Winkel im Verhältnis zu einer Linie, parallel zu der Längsachse, abgewinkelt ist, wenn sich die mit Gewinde versehene Sektion (52) von dem ersten Gewindesektionsende (48), dicht bei der Mündung (30), hin zu dem zweiten Gewindesektionsende (50), beabstandet von der Mündung (30), erstreckt;
(ii) wobei der Winkel mindestens 1 Grad beträgt;
**dadurch gekennzeichnet, dass** das Filtergehäuse (22) ferner eine Aussparung (60) einschließt, die in Axialrichtung zwischen der mit Gewinde versehenen Sektion (52) und der Mündung (30) angeordnet ist, wobei die Aussparung (60) ein Dichtungselement (58) hält.

2. Filtergehäuse (22) nach Anspruch 1, wobei der Winkel zwischen 1 und 20 Grad, vorzugsweise zwischen 2 und 8 Grad, beträgt.

3. Filtergehäuse (22) nach Anspruch 1 oder 2, wobei der Winkel in Radialrichtung nach außen von der Linie, parallel zu der Längsachse (44), abgewinkelt ist.

4. Filtergehäuse (22) nach Anspruch 1 oder 2, wobei der Winkel in Radialrichtung nach innen von der Linie, parallel zu der Längsachse (44), abgewinkelt ist.

5. Filtergehäuse (22) nach einem der vorhergehenden Ansprüche, das ferner einen Ring (46) einschließt, der entlang der Mündung (30) angeordnet ist; wobei der Ring (46) die mit Gewinde versehene Sektion (52) aufweist.

6. Filtergehäuse (22) nach Anspruch 5, wobei der Ring (46) die Außenfläche (40) der umgebenden Wand (26) begrenzt.

7. Filtergehäuse (22) nach Anspruch 6, wobei der Ring (46) gegen die Außenfläche (40) der umgebenden Wand (26) angeordnet ist.

8. Filtergehäuse (22) nach Anspruch 5, wobei der Ring (46) durch die umgebende Wand (26) begrenzt wird.

9. Filtergehäuse (22) nach Anspruch 8, wobei der Ring (46) gegen die Innenfläche (42) der umgebenden Wand (26) angeordnet ist.

10. Filtergehäuse (22) nach einem der Ansprüche 5 bis 9, wobei die umgebende Wand (26) über ein Ende des Rings (46) gewickelt ist.

11. Filtergehäuse (22) nach Anspruch 6, wobei der Ring (46) die Aussparung (60) zum Halten des Dichtungselements (58) aufweist.

12. Filtergehäuse (22) nach Anspruch 11, wobei die umgebende Wand (26) über das erste Ringende (80) gewickelt ist und sich in die Aussparung (60) erstreckt.

13. Filtergehäuse (22) nach einem der Ansprüche 8 und 9, das ferner ein Dichtungselement einschließt, das in Radialrichtung zwischen dem Ring (46) und der umgebenden Wand (26) angeordnet ist.

14. Filtergehäuse (22) nach einem der Ansprüche 1 bis 13, wobei die mit Gewinde versehene Sektion mindestens 3 Gewindegänge aufweist.

15. Aufschraubfilter-Baugruppe (20), die ein Filtergehäuse (22) nach einem der Ansprüche 1 bis 14 und ein Filterelement (24), das nicht-entfernbar in dem inneren Volumen (28) angeordnet ist, umfasst.

## Revendications

1. Logement de filtre (22) destiné à être utilisé pour la filtration de carburant, de fluides hydrauliques ou de fluides de lubrification comprenant :
(a) une paroi périphérique (26) définissant un volume intérieur (28) ; la paroi périphérique (26) ayant une surface intérieure (42) en communication avec le volume intérieur (28) et une surface extérieure opposée (40) ; le logement (22) ayant des première et seconde extrémités opposées (29, 32), et une embouchure ouverte (30) en communication avec le volume intérieur (28) au niveau de la première extrémité (29) ;
(i) un axe longitudinal (44) s'étendant à travers les première et seconde extrémités (29, 32) du logement (22) ; et
(b) une section filetée (52) pour se connecter à une tête de filtre (25) avec une première extrémité de section filetée (48) et une seconde extrémité de section filetée opposée (50) ; la première extrémité de section filetée (48) étant au-dessus de la seconde extrémité de section filetée (50) lorsque le logement est orienté avec l'axe longitudinal (44) s'étendant verticalement et la première extrémité de logement (29) étant au-dessus de la seconde extrémité de logement (32) ;
(i) la section filetée (52) étant inclinée à un certain angle par rapport à une ligne parallèle à l'axe longitudinal, alors que la section filetée (52) s'étend à partir de la première extrémité de section filetée (48) près de l'embouchure (30) vers la seconde extrémité de section filetée (50) espacée de l'embouchure (30) ;
(ii) l'angle étant d'au moins 1 degré ;
**caractérisé en ce que** le logement de filtre (22) inclut en outre un évidement (60) situé de façon axiale entre la section filetée (52) et l'embouchure (30), l'évidement (60) maintenant un élément formant joint (58).

2. Logement de filtre (22) selon la revendication 1, dans lequel l'angle est compris entre 1 et 20 degrés, de préférence entre 2 et 8 degrés.

3. Logement de filtre (22) selon la revendication 1 ou 2, dans lequel l'angle est incliné de façon radiale vers l'extérieur par rapport à la ligne parallèle à l'axe longitudinal (44).

4. Logement de filtre (22) selon la revendication 1 ou 2, dans lequel l'angle est incliné de façon radiale vers l'intérieur par rapport à la ligne parallèle à l'axe longitudinal (44).

5. Logement de filtre (22) selon l'une quelconque des revendications précédentes, incluant en outre un anneau (46) positionné le long de l'embouchure (30) ; l'anneau (46) ayant la section filetée (52).

6. Logement de filtre (22) selon la revendication 5, dans lequel l'anneau (46) circonscrit la surface extérieure (40) de la paroi périphérique (26).

7. Logement de filtre (22) selon la revendication 6, dans lequel l'anneau (46) est positionné contre la surface extérieure (40) de la paroi périphérique (26).

8. Logement de filtre (22) selon la revendication 5, dans lequel l'anneau (46) est circonscrit par la paroi périphérique (26).

9. Logement de filtre (22) selon la revendication 8, dans lequel l'anneau (46) est positionné contre la surface intérieure (42) de la paroi périphérique (26).

10. Logement de filtre (22) selon l'une quelconque des revendications 5 à 9, dans lequel la paroi périphérique (26) est enroulée sur une extrémité de l'anneau (46).

11. Logement de filtre (22) selon la revendication 6, dans lequel l'anneau (46) comporte l'évidement (60) pour maintenir l'élément formant joint (58).

12. Logement de filtre (22) selon la revendication 11, dans lequel la paroi périphérique (26) est enroulée sur la première extrémité d'anneau (80) et s'étend jusque dans l'évidement (60).

13. Logement de filtre (22) selon l'une quelconque des revendications 8 et 9, incluant en outre un élément formant joint positionné de façon radiale entre l'anneau (46) et la paroi périphérique (26).

14. Logement de filtre (22) selon l'une quelconque des revendications 1 à 13, dans lequel la section filetée comporte au moins 3 filets.

15. Ensemble formant filtre à visser (20) comprenant un logement de filtre (22) selon l'une quelconque des revendications 1 à 14 et un élément filtrant (24) positionné de façon non amovible dans le volume intérieur (28).
